# EUROPEAN PATENT APPLICATION

(11) **EP 1 942 454 A2**
(43) Date of publication of application: **09.07.2008**
(21) Application number: 08100121.6
(22) Date of filing: 04.01.2008
(51) Int. Cl.: G06Q 10/00

(54) **Inventory management system**

(30) Priority: 04.01.2007 US 883439 P; 03.01.2008 US 968815
(71) Applicant: Honeywell International Inc., Morristown, New Jersey 07962 (US)
(72) Inventor: Arseneau, Kathy J., Roseville, MN 55113 (US)
(74) Representative: Buckley, Guy Julian

(57) **Abstract**

A system for managing inventory is provided that comprises a plurality of user terminals, each at a point-of-use location associated with an inventory-consuming entity, a web portal server computer accessible by the plurality of user terminals through an internet, the web portal server administered by the inventory-consuming entity, and a database server in communication with the web portal server. The database server administers a database comprising a plurality of tables relating to user roles and privileges records, consumable part quantity on hand, vendor information, and consumable part characteristics in order to provide a multi-level point of use replenishment system.

## Description

### FIELD OF THE INVENTION

The present invention relates to an inventory management system, and more particularly, to an inventory management system for tracking and purchasing internal and external inventory.

### BACKGROUND OF THE INVENTION

Large manufacturing companies are typically spread across many locations and often manufacture many products, each of which may require many parts and/or supplies to produce. In addition, many of these products, parts, and supplies may be subject to various requirements, such as shelf-life guidelines. Examples of materials that may be required include epoxy, chemicals, paper products, wire, tubing, hand tools, and other materials that may be pertinent to a company's industry.

While a variety of off-the-shelf software inventory management platforms exist (e.g. those offered by SAP and Oracle) for managing certain portions of the inventory management process, these have typically proven to be difficult to integrate with one another. It would be desirable to have a single interface to one or more of these platforms, so that users can be assigned privileges that allow them to order and manage materials, to ensure that critical materials are not depleted, while managing and tracking material levels with various contract flow down requirements, revisions, certified versus non-certified, and units of measure regardless of the inventory management platform (e.g. SAP and Oracle). It would also be desirable for the purchasing of materials to be centralized among a plurality of users, such as all users of a particular system, in order to reduce inventories and provide opportunities for improved pricing while eliminating stock-outs.

### BRIEF DESCRIPTION OF THE DRAWINGS

Fig. 1 is a representative system diagram illustrating an inventory management system according to an embodiment of the present invention.
Fig. 2 shows a pictorial representation of a display screen for a user device, showing a welcome screen, according to one embodiment of the invention.
Fig. 3 shows a pictorial representation of a display screen for a user device, showing an initial menu screen, according to one embodiment of the invention.
Fig. 4 shows a pictorial representation of a display screen for a user device, showing a vendor details screen, according to one embodiment of the invention.
Fig. 5 shows a pictorial representation of a display screen for a user device, showing a unit of measure screen, according to one embodiment of the invention.
Fig. 6 shows a pictorial representation of a display screen for a user device, showing a parts management screen, according to one embodiment of the invention.
Fig. 7 shows a pictorial representation of a display screen for a user device, showing an account details screen, according to one embodiment of the invention.
Fig. 8 shows a pictorial representation of a display screen for a user device, showing a building details screen, according to one embodiment of the invention.
Fig. 9 shows a pictorial representation of a display screen for a user device, showing a department details screen, according to one embodiment of the invention.
Fig. 10 shows a pictorial representation of a display screen for a user device, showing a crib management screen, according to one embodiment of the invention.
Fig. 11 shows a pictorial representation of a display screen for a user device, showing a quality control codes screen, according to one embodiment of the invention.
Fig. 12A shows a pictorial representation of a display screen for a user device, showing a web links management screen, according to one embodiment of the invention.
Fig. 12B shows a pictorial representation of a display screen for a user device, showing a news administration management screen, according to one embodiment of the invention.
Fig. 13 shows a pictorial representation of a display screen for a user device, showing a user role administration screen, according to one embodiment of the invention.
Fig. 14 shows a pictorial representation of a display screen for a user device, showing a user management screen, according to one embodiment of the invention.
Fig. 15 shows a pictorial representation of a display screen for a user device, showing a role functions screen, according to one embodiment of the invention.
Fig. 16 shows a pictorial representation of a display screen for a user device, showing a role privileges screen, according to one embodiment of the invention.
Fig. 17 shows a pictorial representation of a display screen for a user device, showing a part requirement screen, according to one embodiment of the invention.
Fig. 18 shows a pictorial representation of a display screen for a user device, showing a part consumption screen (bar code reader entry), according to one embodiment of the invention.
Fig. 19 shows a pictorial representation of a display screen for a user device, showing a part consumption screen (manual data entry), according to one embodiment of the invention.
Fig. 20 shows a pictorial representation of a display screen for a user device, showing a part transfer screen, according to one embodiment of the invention.
Fig. 21 shows a pictorial representation of a display screen for a user device, showing a short parts by location screen, according to one embodiment of the invention.
Fig. 22 shows a pictorial representation of a display screen for a user device, showing a procurement replenishment report screen, according to one embodiment of the invention.
Fig. 23 shows a pictorial representation of a display screen for a user device, showing a new requirement report screen, according to one embodiment of the invention.
Fig. 24 shows a pictorial representation of a display screen for a user device, showing a location transaction report screen, according to one embodiment of the invention.
Fig. 25 shows a pictorial representation of a display screen for a user device, showing a last activity report screen, according to one embodiment of the invention.
Fig. 26 shows a pictorial representation of a display screen for a user device, showing a retest date report screen, according to one embodiment of the invention.
Fig. 27 shows a pictorial representation of a display screen for a user device, showing a stock number and value report screen, according to one embodiment of the invention.
Fig. 28 shows a pictorial representation of a display screen for a user device, showing a point of use grid report screen, according to one embodiment of the invention.
Fig. 29 shows a pictorial representation of a display screen for a user device, showing a department consumption report screen, according to one embodiment of the invention.
Fig. 30 shows a pictorial representation of a display screen for a user device, showing a chemical report screen, according to one embodiment of the invention.
Fig. 31 shows a pictorial representation of a display screen for a user device, showing a user report screen, according to one embodiment of the invention.
Fig. 32 shows a pictorial representation of a display screen for a user device, showing a search results screen, according to one embodiment of the invention.
Fig. 33 shows a pictorial representation of a display screen for a user device, showing an inventory data view screen, according to one embodiment of the invention.

### DETAILED DESCRIPTION

In accordance with preferred embodiments illustrated in the figures and described herein, a system for managing inventory is provided that comprises a plurality of user terminals, each at a point-of-use location associated with an inventory-consuming entity, a web portal server computer accessible by the plurality of user terminals through an internet, the web portal server administered by the inventory-consuming entity, and a database server in communication with the web portal server. The database server administers a database comprising a plurality of tables, wherein a first table is populated with user roles and privileges records, wherein a second table is populated with consumable part quantity on hand records, wherein a third table is populated with vendor information records, and wherein a fourth table is populated with consumable part characteristics records. In addition, a fifth table with parts requirements information, and a sixth table with crib management information, as well as other tables, may be included in order to provide desired tracking, management, and report functionality.

Upon being accessed by one of the plurality of user terminals, the web portal server computer transmits data via the internet to enable the accessing user terminal to display web pages for a user according to user roles and privileges associated with that user, as determined by reference to data stored in the first table.

Upon receiving a request from one of the plurality of user terminals to consume a first consumable part, the web portal server modifies the second table to reflect a new quantity on hand of the first consumable part.

Each consumable part supplied by an entity other than the inventory-consuming entity has the vendor information associated therewith in the third table, wherein the vendor information includes at least vendor name and contact information.

Each consumable part in the fourth table has at least one of the following consumable part characteristics associated with it in the fourth table: shelf life, quality control code, unit of measure, and lead time in order to provide a multi-level point of use replenishment system.

The web portal server accesses the shelf life information in the fourth table and the vendor information in the third table in order to provide age control tracking and replenishment. For example, the web portal server (or an affiliated network component) could transmit a new order request to a vendor/supplier upon once a minimum quantity is reached for a particular part or once a shelf life is approaching, reached, or exceeded.

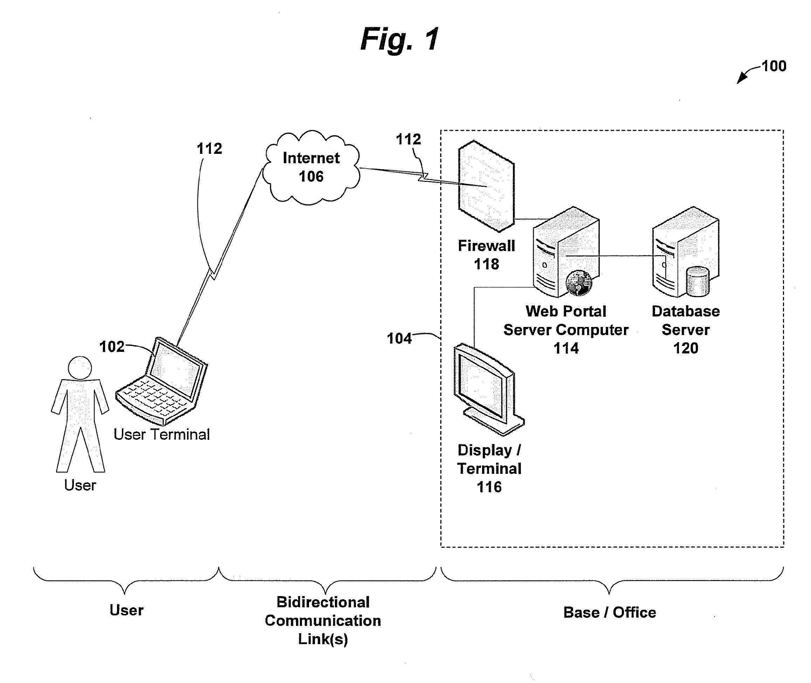

Fig. 1 shows one embodiment of an inventory management system 100 that includes one or more user devices 102 (user terminals) that may be used by users to bidirectionally communicate 112 with base/office server system 104. The bidirectional communications 112 are preferably over the Internet 106, which the user device 102 may access through a gateway (not shown). The preferred protocol used to communicate data is HTTPS (HyperText Transfer Protocol with SSL (Secure Socket Layer) encryption for security). Instead of the Internet, a corporate LAN or WAN could alternatively be used, as could other types of networks, using other protocols for security and data transport.

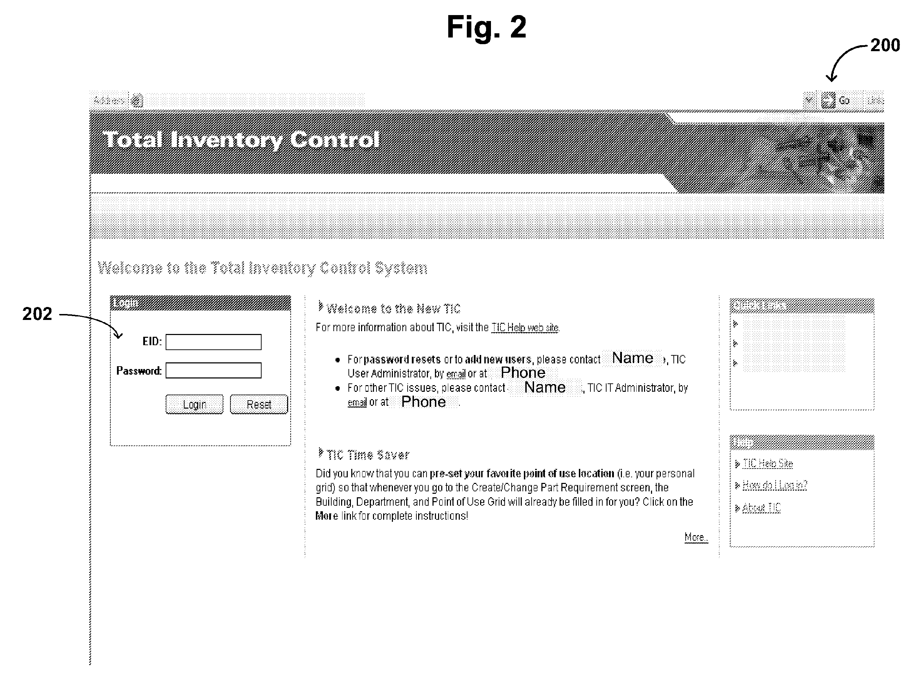

To provide the functionality afforded by various embodiments of the present invention, the user device 102 preferably includes software, hardware, firmware, or a combination of these, to allow the user device 102 to act as a client device with respect to the server system 104. As such, the user device preferably includes one or more resident software applications and associated data storage so that the user device can be configured to perform one or more of the functions illustrated in Figs. 2-33. A plurality of user devices are preferably distributed across a plurality of point of use locations in order to transact with the system 100 to manage an inventory of consumable parts located in cribs in the plurality of point of use locations.

The server system 104 in the illustrated embodiment includes a web portal server computer 114 and one or more associated displays 116, a firewall 118, and one or more database servers 120. The server system 104 may be a centralized nationwide central system that provides administration services for several or many locations in different regions. Alternatively, each region could be serviced by one or more dedicated server systems 104, but efficiencies caused by combining inventories likely would not be realized as effectively. Multiple server systems 104 and/or multiple components within the server system 104 may be included in order to provide redundancy and/or load balancing.

The server computer 114 acts as a server to the user device 102 and is preferably provided with a software based web server application that performs many actions to facilitate inventory management. Since bidirectional communications with the user device 102 may be over the public Internet 106, the server computer 114 is preferably connected to the Internet 106 through the firewall 118. Communications between the user terminal 102 and the server computer 114 are preferably authenticated and encrypted.

The one or more displays / terminals 116 may be used by office-based staff to create, modify, and otherwise interact with the server computer 114. Examples of such devices 116 include desktop PCs, laptop computers, Tablet PCs, workstations, or any computer devices running on any Operating System that can connect to a World Wide Web server to retrieve and display web pages.

The database server 120 may selectively store various types of data that provide assistance in the management and administration of purchasing and tracking inventory. This may include data representing minimum and maximum requirements, as well as and indication of what is currently on hand. The data may include external information, such as for purchasing, and internal information, such as stock on hand. In addition, other information, such as shelf-life requirements may also be stored and managed by the database server 120.

Fig. 2 shows a pictorial representation of a display screen for a user device, showing a welcome screen 200, according to one embodiment of the invention. The welcome screen 200 may include, for example, a login portion 202, for determining whether a user is authorized or not. In addition, the login information may also be used to determine the privilege status of the user (e.g. administrator, user, etc.). The welcome screen 200 may also include additional information, such as contact information, help information, and links to other web pages.

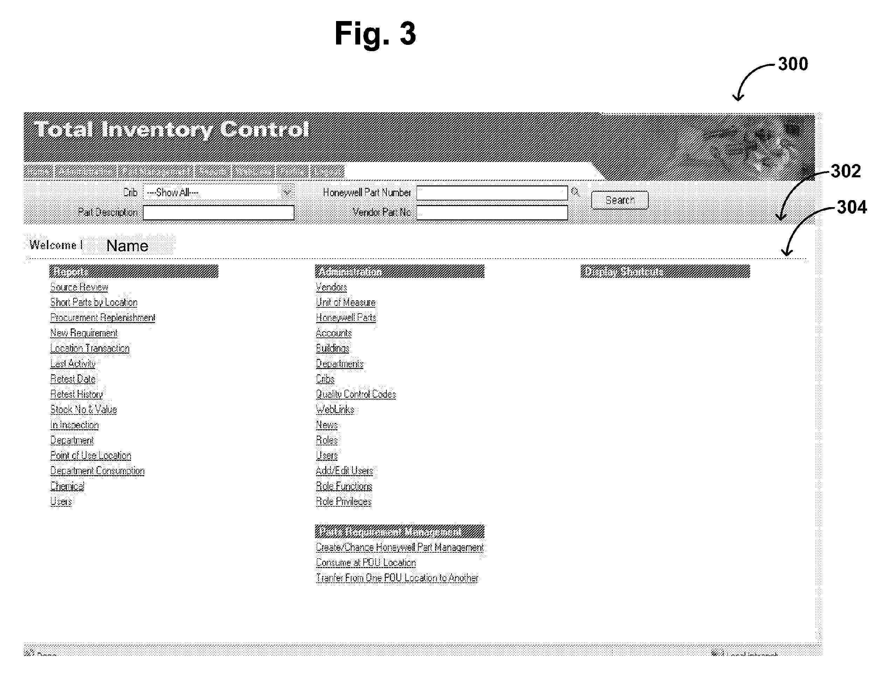

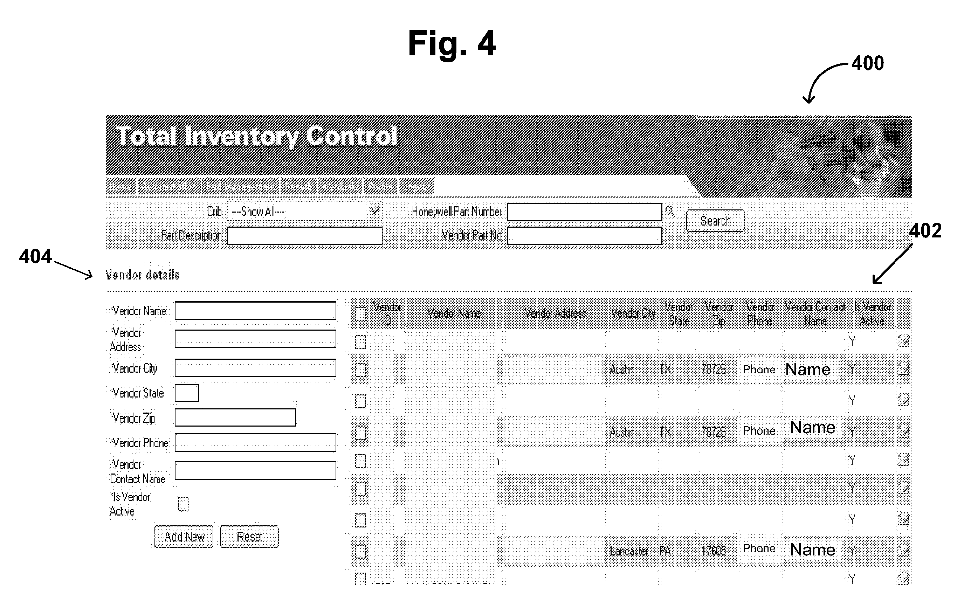

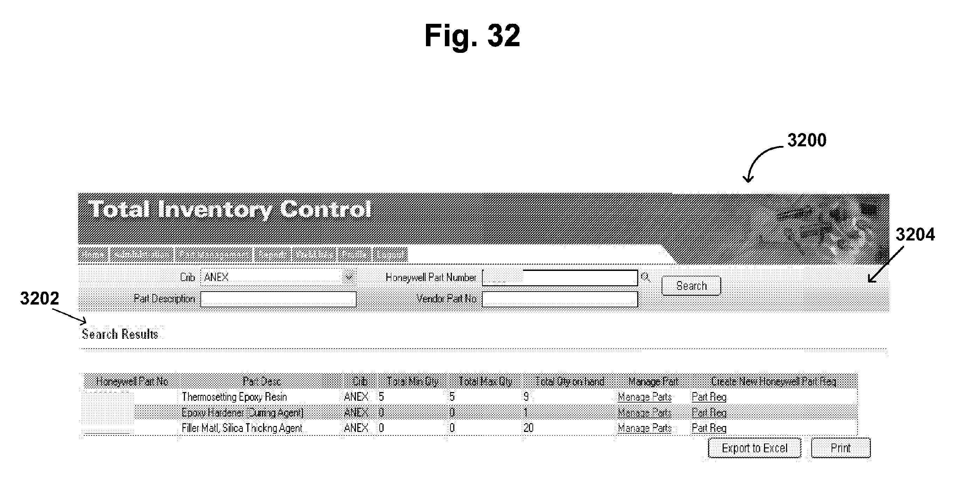

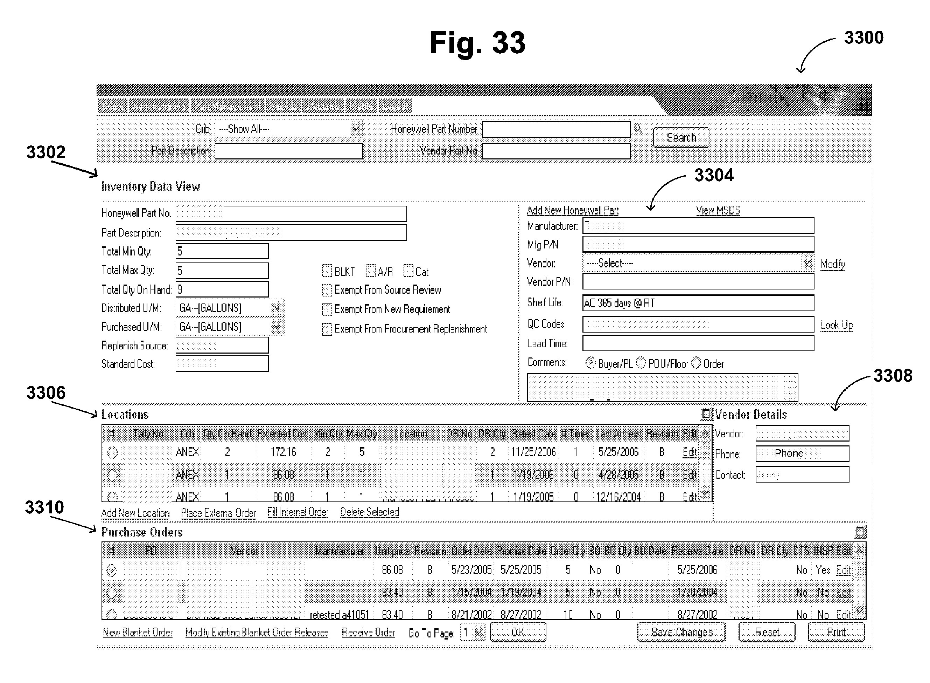

Fig. 3 shows a pictorial representation of a display screen for a user device, showing an initial menu screen 300, according to one embodiment of the invention. The initial menu screen 300 includes a search portion 302 and a menu portion 304. Additional details regarding the search portion 302 (which is shown, but not described, in many of the following figures) are set forth in Figs. 32 and 33. The menu portion 304 includes categories of hyperlinks to additional web pages. In the embodiment shown on screen 300, the categories include reports, administration, and parts requirement management. The links in each of these categories are described in the following Figs. 4-31.

Fig. 4 shows a pictorial representation of a display screen for a user device, showing a vendor details screen 400, according to one embodiment of the invention. The vendor details screen 400 includes a table of vendors 402 and a vendor details form 404. The table of vendors 402 includes vendor information, such as vendor ID, vendor name, vendor address, vendor contact information, and whether the vendor is active. In the particular screen 400 shown in Fig. 4 (and in other screens illustrated and described herein), certain form data has been redacted. The data types (e.g. column headings) have not been redacted. The vendor details form 404 allows a user to add new vendor information to the system by presenting the user with a form that may be completed with information pertaining to the new vendor.

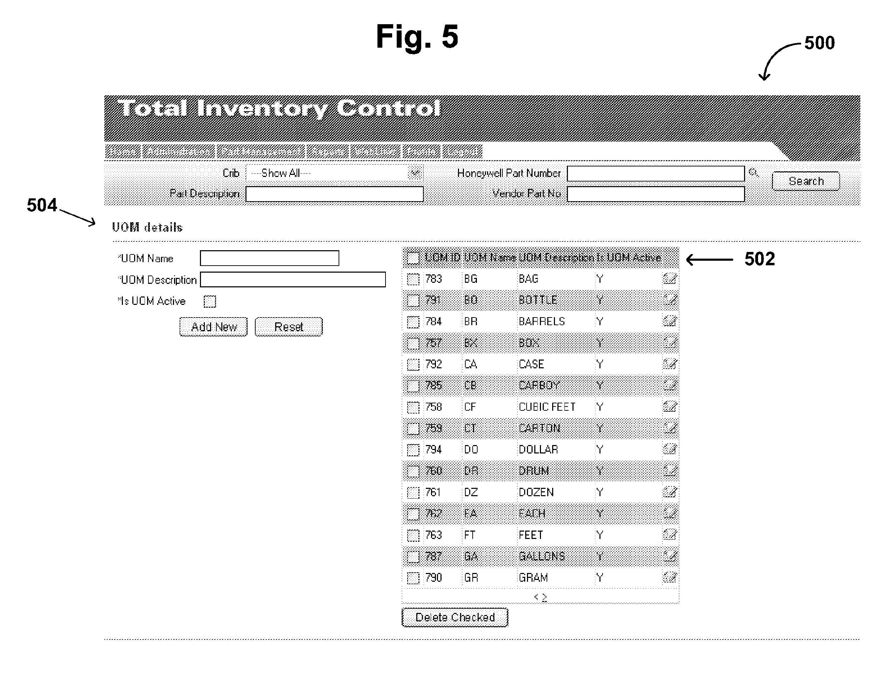

Fig. 5 shows a pictorial representation of a display screen for a user device, showing a unit of measure (UOM) screen 500, according to one embodiment of the invention. The unit of measure (UOM) screen 500 includes a UOM table 502 and a UOM details form 504. The UOM table 502 includes UOM information, such as UOM ID, UOM name, UOM description, and whether the UOM is active. The UOM details form 504 allows a user to add new UOM information to the system by presenting the user with a form that may be completed with information pertaining to the new UOM.

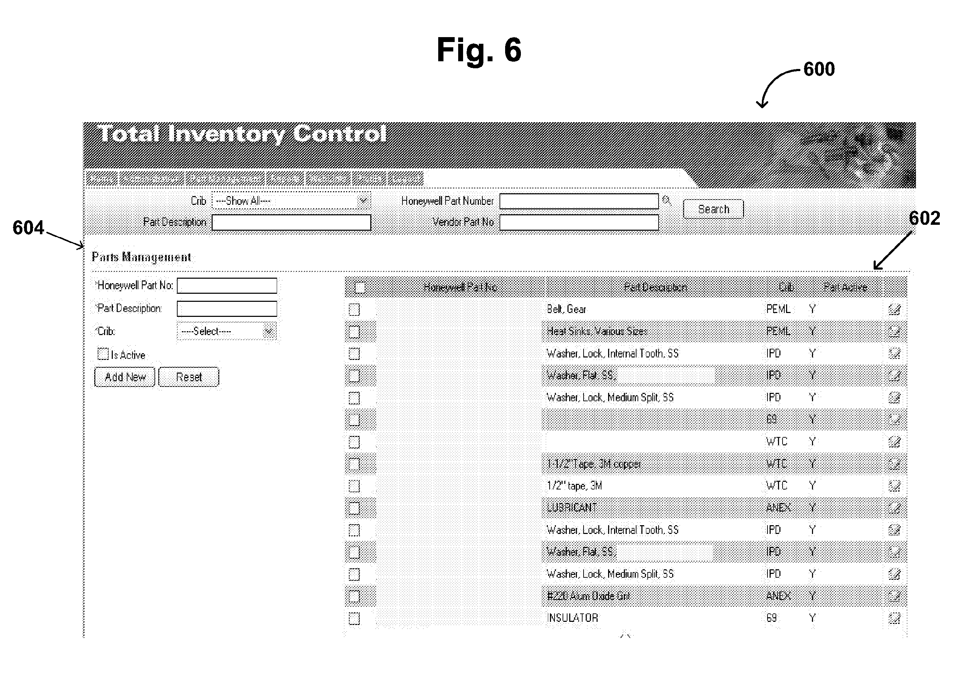

Fig. 6 shows a pictorial representation of a display screen for a user device, showing a parts management screen 600, according to one embodiment of the invention. The parts management screen 600 includes a parts management table 602 and a parts management details form 604. The parts management table 602 includes parts information, such as part number, part description, crib location, and whether the part is active. The parts management details form 604 allows a user to add new part information to the system by presenting the user with a form that may be completed with information pertaining to the new part.

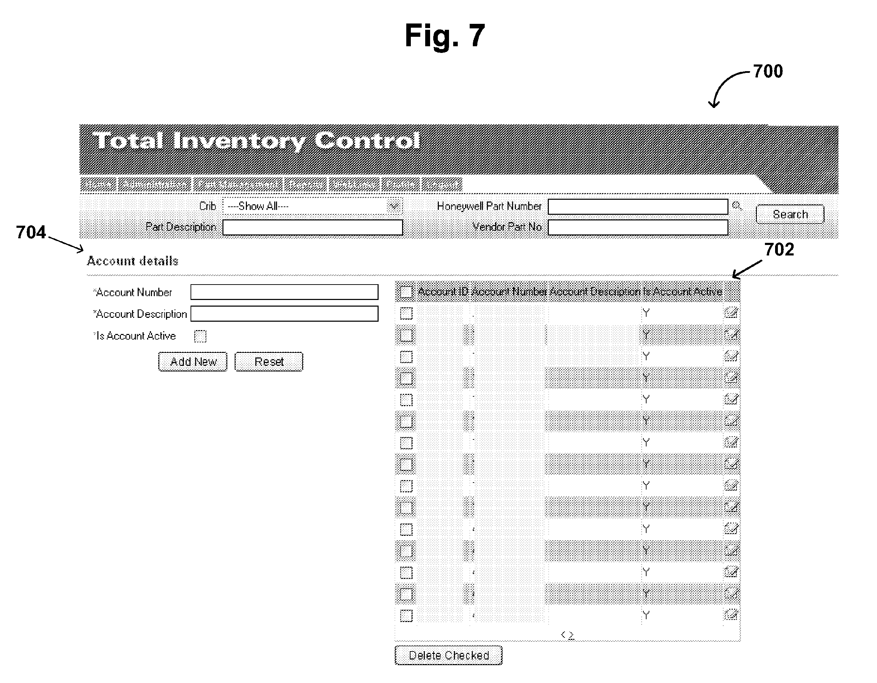

Fig. 7 shows a pictorial representation of a display screen for a user device, showing an account details screen 700, according to one embodiment of the invention. The account details screen 700 includes an accounts table 702 and an account details form 704. The accounts table 702 includes accounts information, such as account ID, account number, account description, and whether the account is active. The account details form 704 allows a user to add new account information to the system by presenting the user with a form that may be completed with information pertaining to the new account.

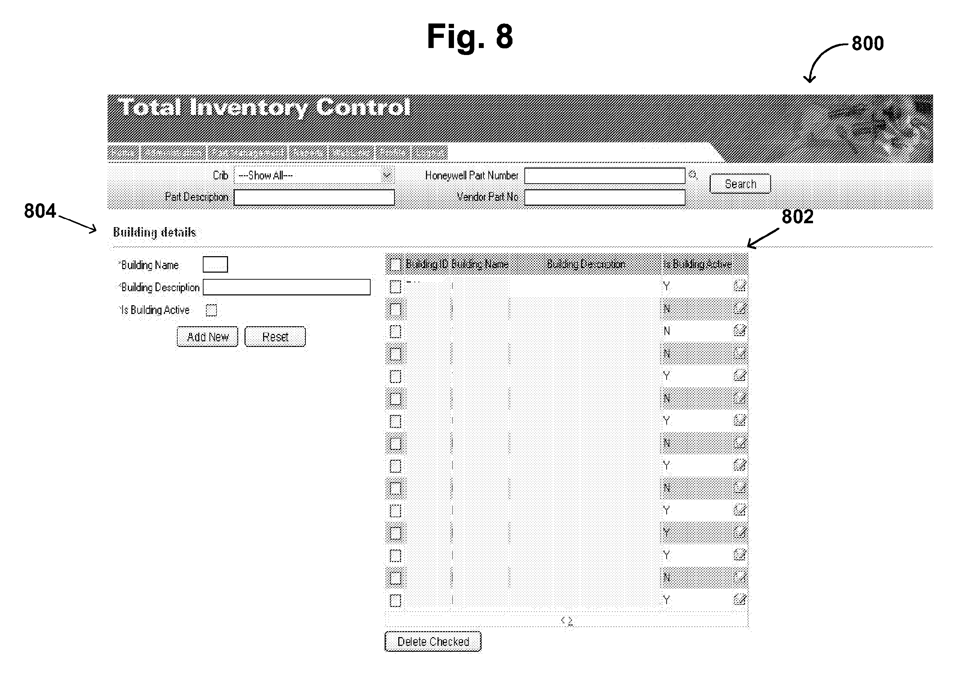

Fig. 8 shows a pictorial representation of a display screen for a user device, showing a building details screen 800, according to one embodiment of the invention. The building details screen 800 includes a buildings table 802 and a building details form 804. The buildings table 802 includes building information, such as building ID, building name, building description, and whether the building is active. The building details form 804 allows a user to add new building information to the system by presenting the user with a form that may be completed with information pertaining to the new building.

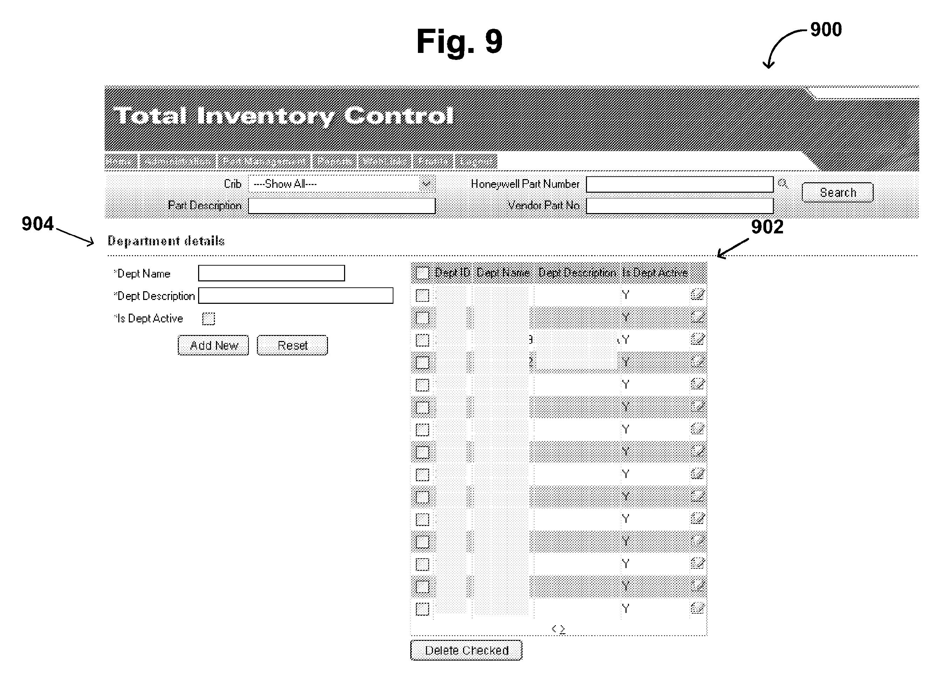

Fig. 9 shows a pictorial representation of a display screen for a user device, showing a department details screen 900, according to one embodiment of the invention. The department details screen 900 includes a departments table 902 and a department details form 904. The departments table 902 includes department information, such as department ID, department name, department description, and whether the department is active. The department details form 904 allows a user to add new department information to the system by presenting the user with a form that may be completed with information pertaining to the new department.

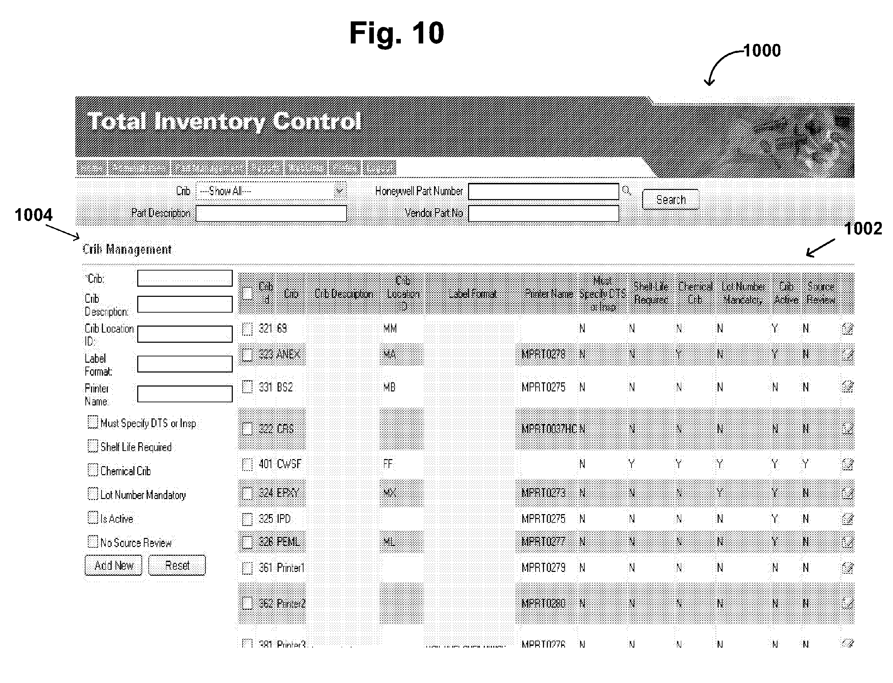

Fig. 10 shows a pictorial representation of a display screen for a user device, showing a crib management screen 1000, according to one embodiment of the invention. The crib management screen 1000 includes a cribs table 1002 and a crib management form 1004. The cribs table 1002 includes information about cribs, such as crib ID, crib code, crib description, crib location ID, label format, printer name, and a number of binary options relating to specifics of the crib. The crib management form 1004 allows a user to add new crib information to the system by presenting the user with a form that may be completed with information pertaining to the new crib.

The database administered by the database server 120 may comprise a sixth table populated with crib management records that include some or all of the information shown in Fig. 10.

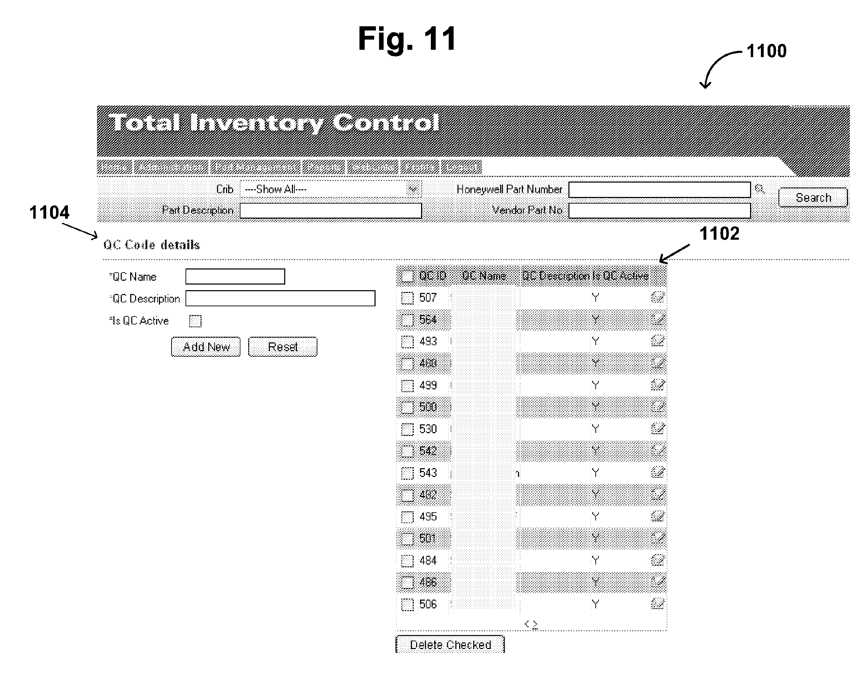

Fig. 11 shows a pictorial representation of a display screen for a user device, showing a quality control codes screen 1100, according to one embodiment of the invention. The quality control (QC) codes screen 1100 includes a QC table 1102 and a QC code details form 1104. The QC table 1102 includes information about quality control, such as QC ID, QC name, QC description, and whether the QC ID is active. The QC code details form 1104 allows a user to add new QC information to the system by presenting the user with a form that may be completed with information pertaining to the new QC item.

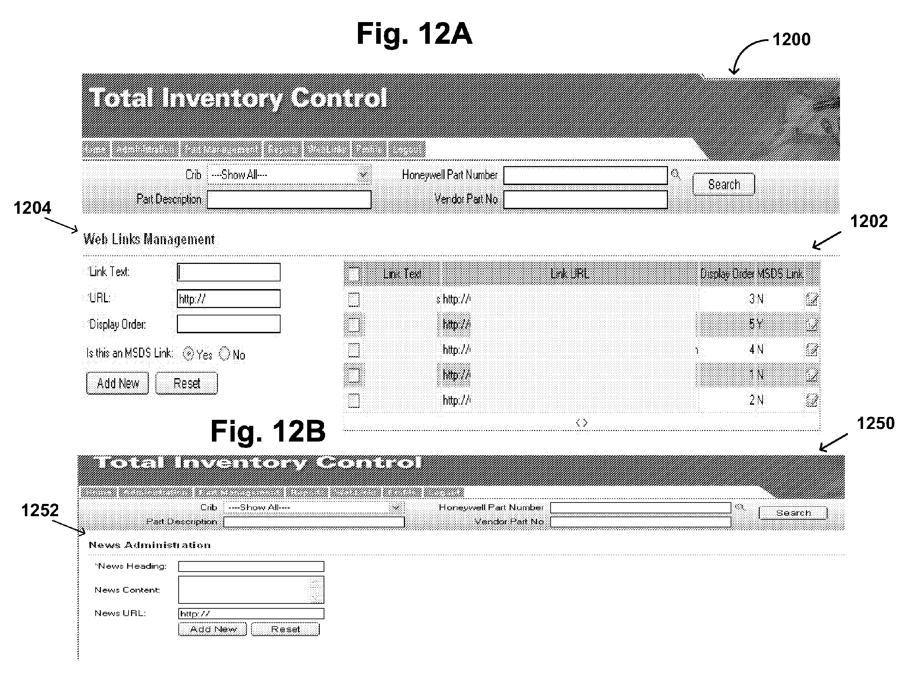

Fig. 12A shows a pictorial representation of a display screen for a user device, showing a web links management screen 1200, according to one embodiment of the invention. The web links management screen 1200 includes a web links table 1202 and a web links management form 1204. The web links table 1202 includes information pertaining to web links, such as link text, link URL, display order, and MSDS (Material Safety Data Sheet) link information. The web links management form 1204 allows a user to add new web link information to the system by presenting the user with a form that may be completed with information pertaining to the new web link.

Fig. 12B shows a pictorial representation of a display screen for a user device, showing a news administration management screen 1250, according to one embodiment of the invention. The news administration management screen 1250 includes a news administration form 1252 to allow a user to add news information to the system by presenting the user with a form that may be completed with information pertaining to the news to be added. A list of news items may also be presented (e.g. in tabular form) on the screen 1250.

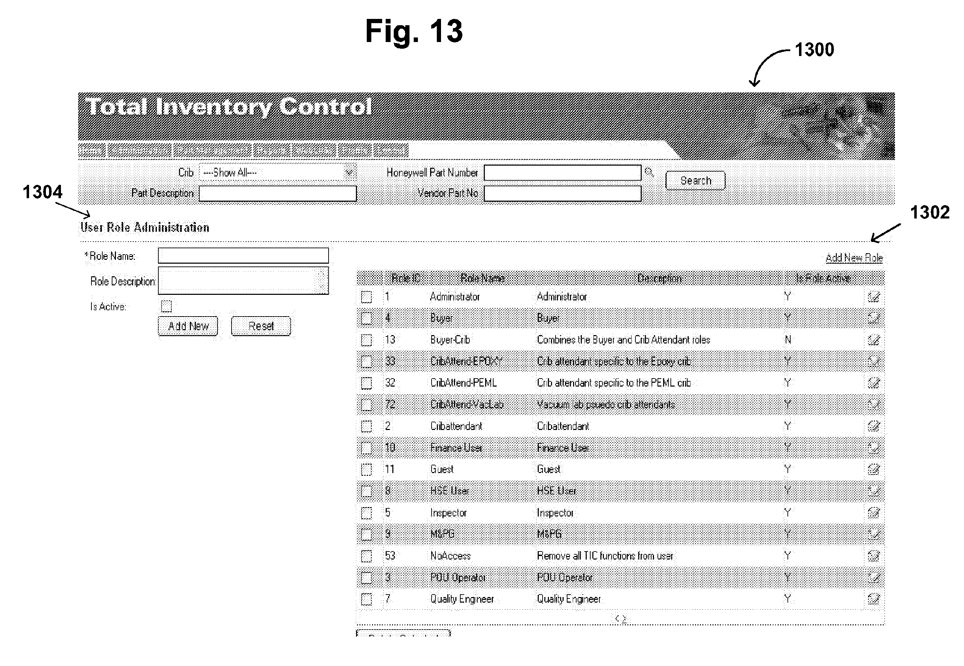

Fig. 13 shows a pictorial representation of a display screen for a user device, showing a user role administration screen 1300, according to one embodiment of the invention. The user role administration screen 1300 includes a user roles table 1302 and a user role administration form 1304. The user roles table 1302 includes information about user roles, such as role ID, role name, description, and whether the role is active. The user role administration form 1304 allows a user to add new user role information to the system by presenting the user with a form that may be completed with information pertaining to the new user role.

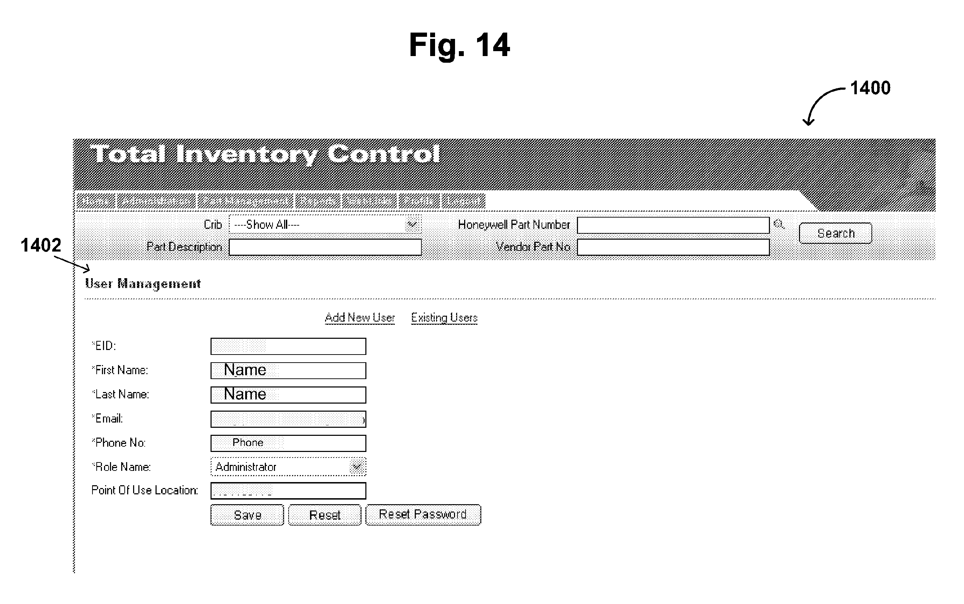

Fig. 14 shows a pictorial representation of a display screen for a user device, showing a user management screen 1400, according to one embodiment of the invention. The user management screen 1400 includes a user management form 1402 to allow a user to add new user information to the system by presenting the user with a form that may be completed with information pertaining to the new user.

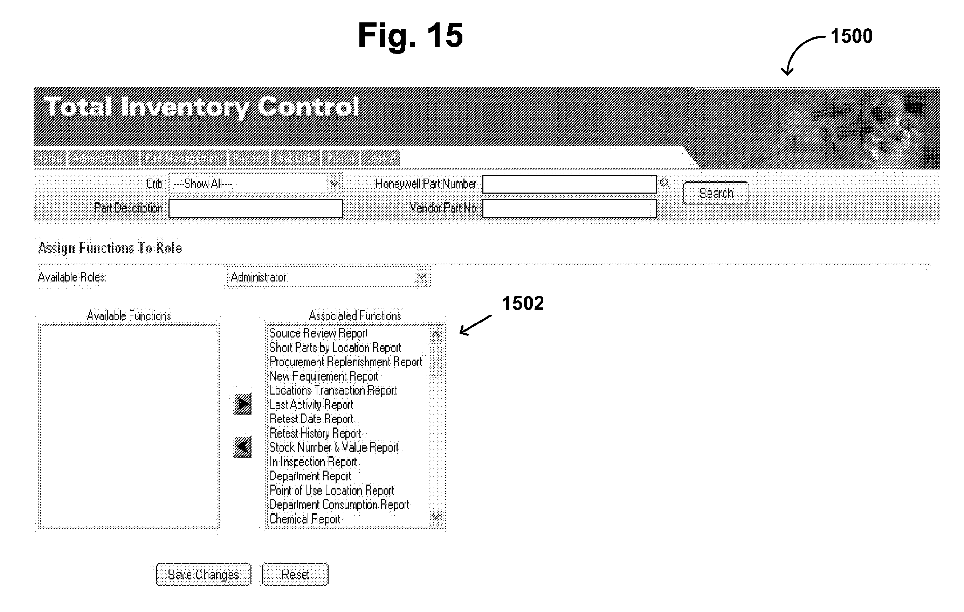

Fig. 15 shows a pictorial representation of a display screen for a user device, showing a role functions screen 1500, according to one embodiment of the invention. The role functions screen 1500 includes a role functions assignment interface 1502 to allow a user to assign functions to roles. In the example shown, the role of administrator has been assigned all available functions (see the "Associated Functions" box).

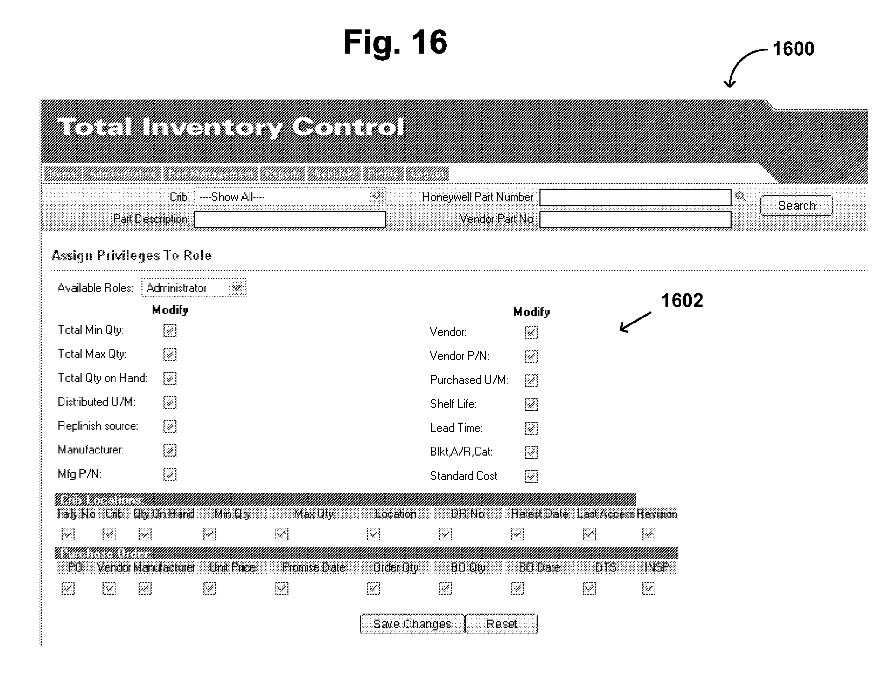

Fig. 16 shows a pictorial representation of a display screen for a user device, showing a role privileges screen 1600, according to one embodiment of the invention. The role privileges screen 1600 includes a role privileged assignment interface 1602 to allow a user to assign privileges to roles. In the example shown, the role of administrator has been assigned all available privileges (all available boxes are shown checked).

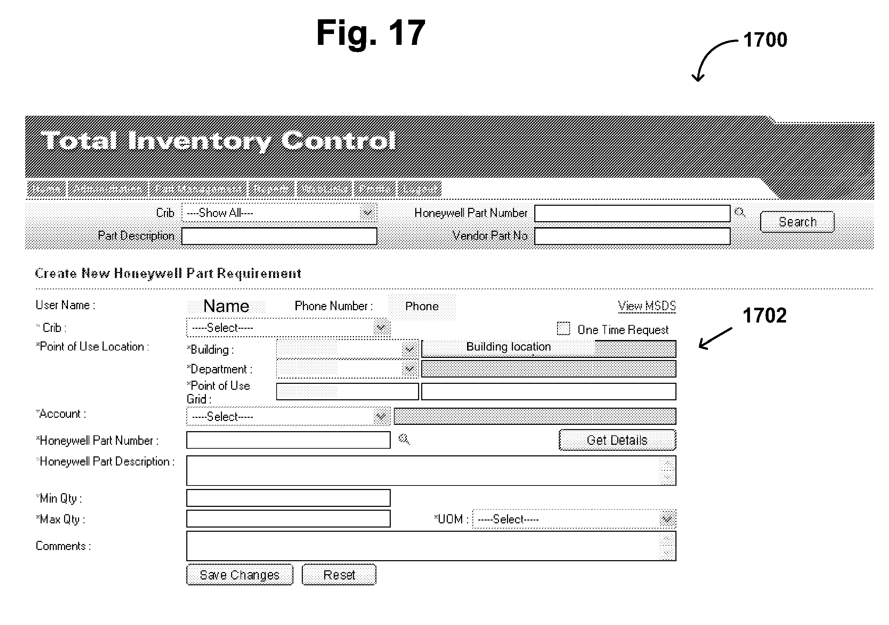

Fig. 17 shows a pictorial representation of a display screen for a user device, showing a part requirement screen 1700, according to one embodiment of the invention. The part requirement screen 1700 includes form 1702 for creating new part requirements. Information that may be entered by the user includes crib, point of use location, account, part number and description, minimum and maximum quantities, unit of measure, and comments.

The database administered by the database server 120 may comprise a fifth table populated with parts requirements records for the inventory-consuming entity, the parts requirements records including information pertaining to point of use location, account information, part information, minimum quantity, and maximum quantity. Other information, such as additional information shown in Fig. 17 may also be included in the parts requirements records. Upon receiving a request from one of the plurality of user terminals, such as user device 102, to create a new part requirement, the web portal server transmits data to cause a web-based form to be displayed on the user terminal to obtain information for updating the parts requirements records with the new part requirement. In a preferred embodiment, the web-based form is pre-populated with a point of use location stored in the first table of the database with the user roles and privileges information.

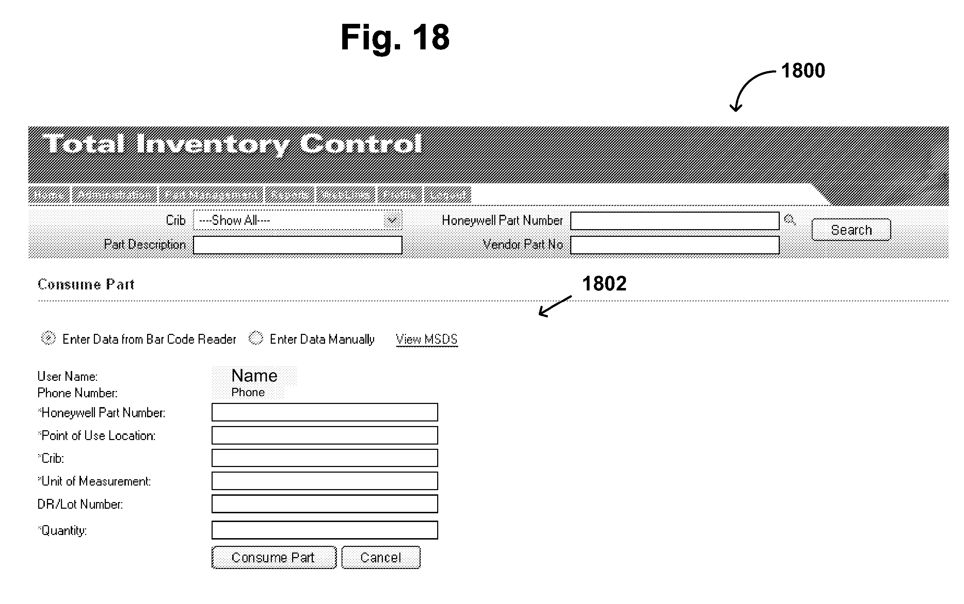

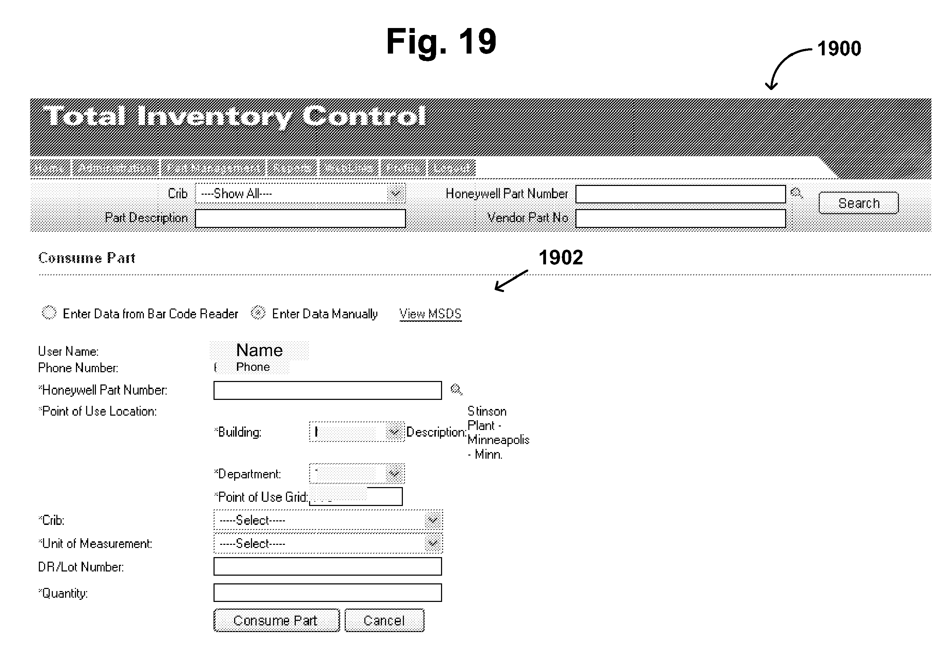

Figs. 18 and 19 show pictorial representations of a display screen for a user device, including a part consumption screen (bar code reader entry) 1800 and a part consumption screen (manual data entry) 1900, according to one embodiment of the invention. The part consumption screens 1800 and 1900 include consume part forms 1802 and 1902, which can be populated by a user with information such as user name and contact information, part number, point-of-use location, crib, unit of measurement, DR/lot number, and quantity. The data may be entered manually (Fig. 19), by a bar code reader (Fig. 18), or by other techniques. Upon receiving a request from one of the plurality of user terminals 102 to consume a part, the web portal server 114 transmits data to cause a web-based form to be displayed on the user terminal 102 to obtain information to modify the consumable part quantity on hand records in the second table of the database administered by the database server 120.

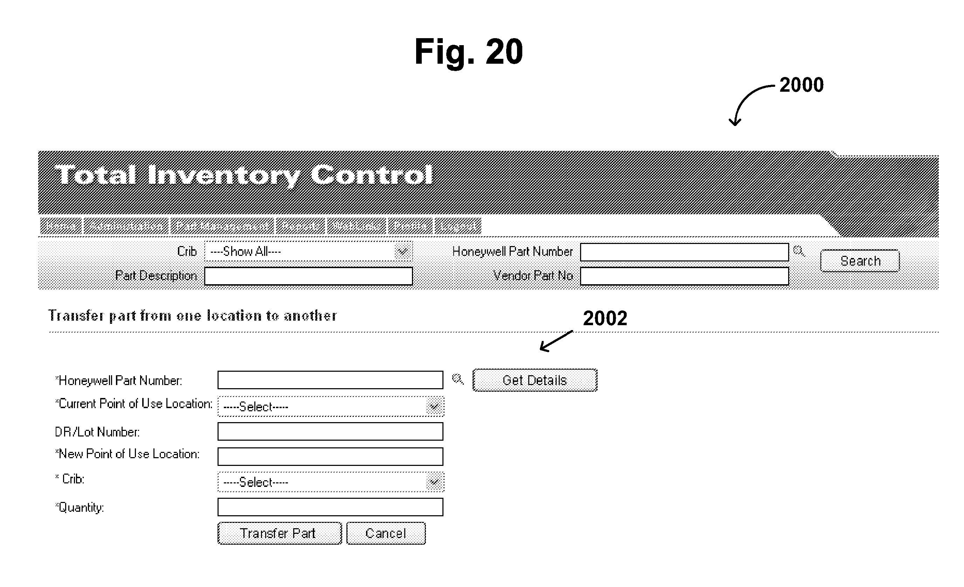

Fig. 20 shows a pictorial representation of a display screen for a user device, showing a part transfer screen 2000, according to one embodiment of the invention. The part transfer screen 2000 includes a transfer form 2002 for entering information pertaining to transferring a part from one location to another. The entered information may include, for example, part number, current point of use location, DR/lot number, new point of use location, crib, and quantity.

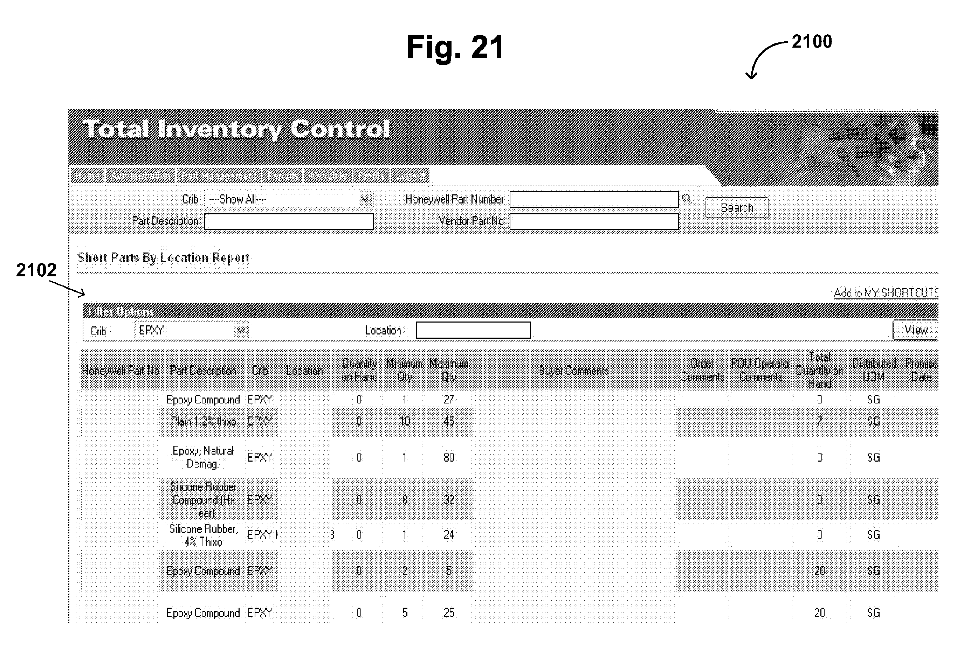

Figs. 21-31 show examples of reports that may be requested and generated using the system 100. Upon receiving a request from one of the plurality of user terminals 102 to generate a report, the web portal server 114 communicates with the database server 120 to obtain data to generate the requested report. The web portal server 114 then generates the requested report and transmits data to cause the generated report to be displayed on the user terminal 102. The report displayed at the user terminal 102 may be formatted differently from what was generated at the web portal server 114.

Fig. 21 shows a pictorial representation of a display screen for a user device, showing a short parts by location screen 2100, according to one embodiment of the invention. The short parts by location screen 2100 includes a report table 2102 illustrating information about short parts for a particular location. The table 2102 could include information such as part number and description, crib, location, quantity on hand, minimum quantity, maximum quantity, comments, total quantity on hand, distributed unit of measurement, and promise date.

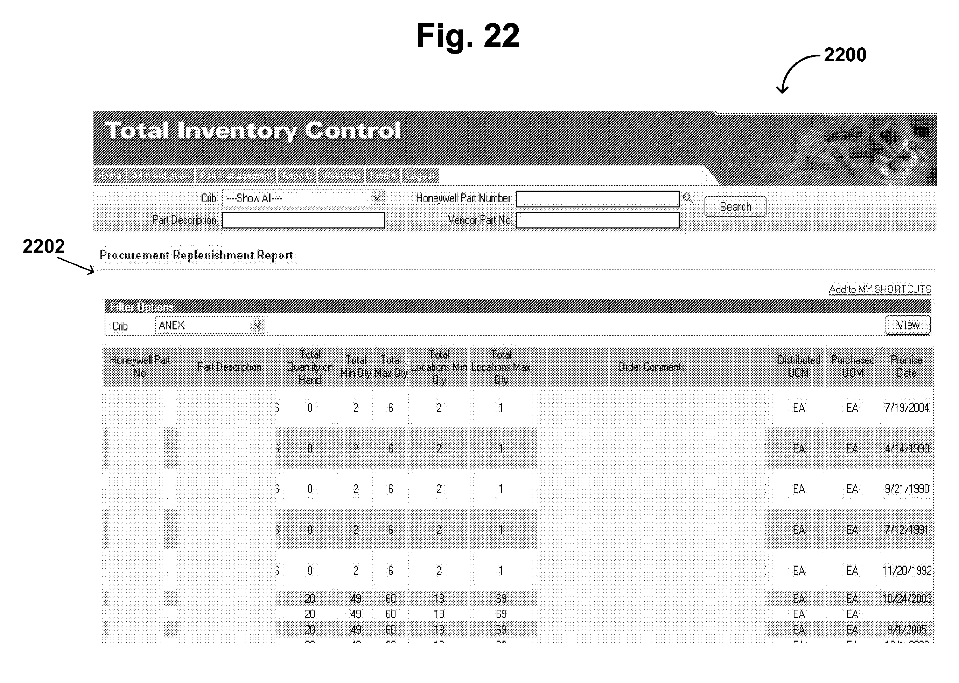

Fig. 22 shows a pictorial representation of a display screen for a user device, showing a procurement replenishment report screen 2200, according to one embodiment of the invention. The procurement replenishment report screen 2200 includes a report table 2202 illustrating information about procurement replenishment. The table 2202 may include information similar to that shown in the table 2102.

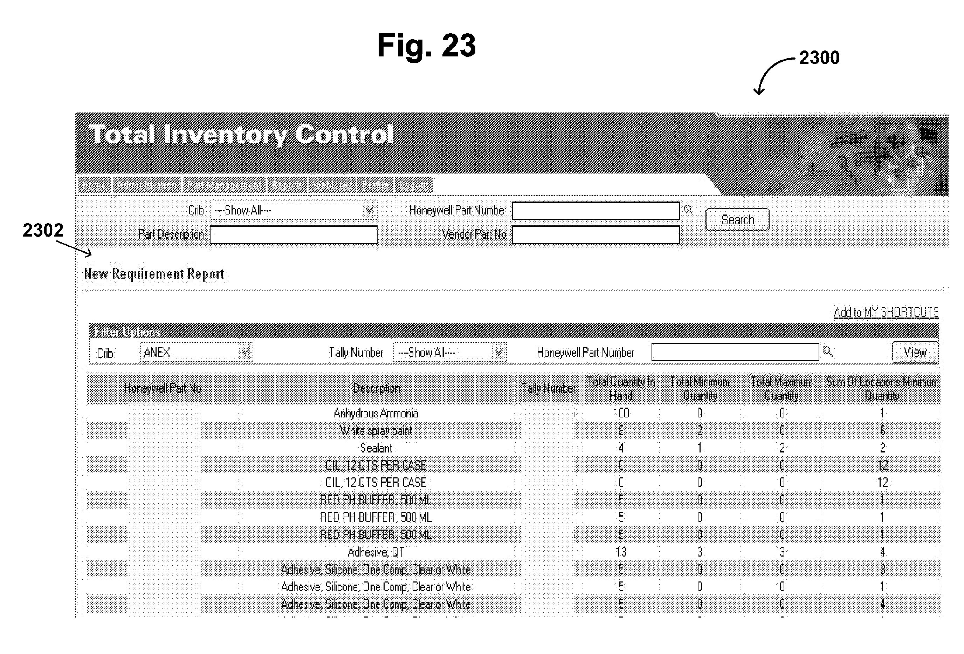

Fig. 23 shows a pictorial representation of a display screen for a user device, showing a new requirement report screen 2300, according to one embodiment of the invention. The new requirement report screen 2300 includes a report table 2302 showing new requirements information. Such information might include part number and description, tally number, quantity information, and sum of locations minimum quantity.

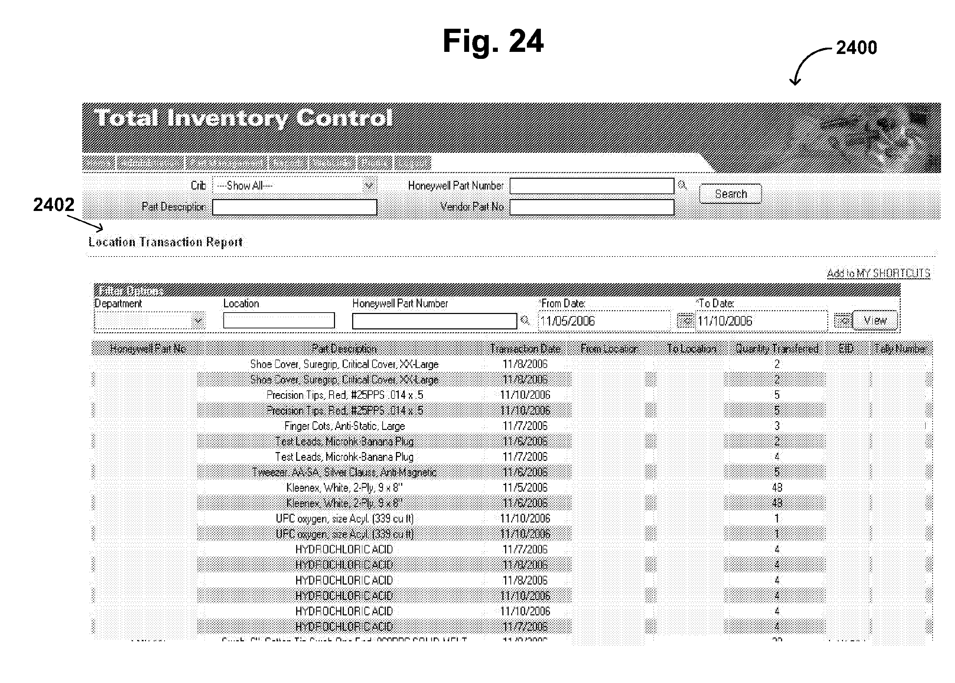

Fig. 24 shows a pictorial representation of a display screen for a user device, showing a location transaction report screen 2400, according to one embodiment of the invention. The location transaction report screen 2400 includes a report table 2402 showing location transaction information. The information in the report table 2402 may include part number and description, transaction date, from location, to location, quantity transferred, EID, and tally number. A filter may be included to allow the user to filter the report information.

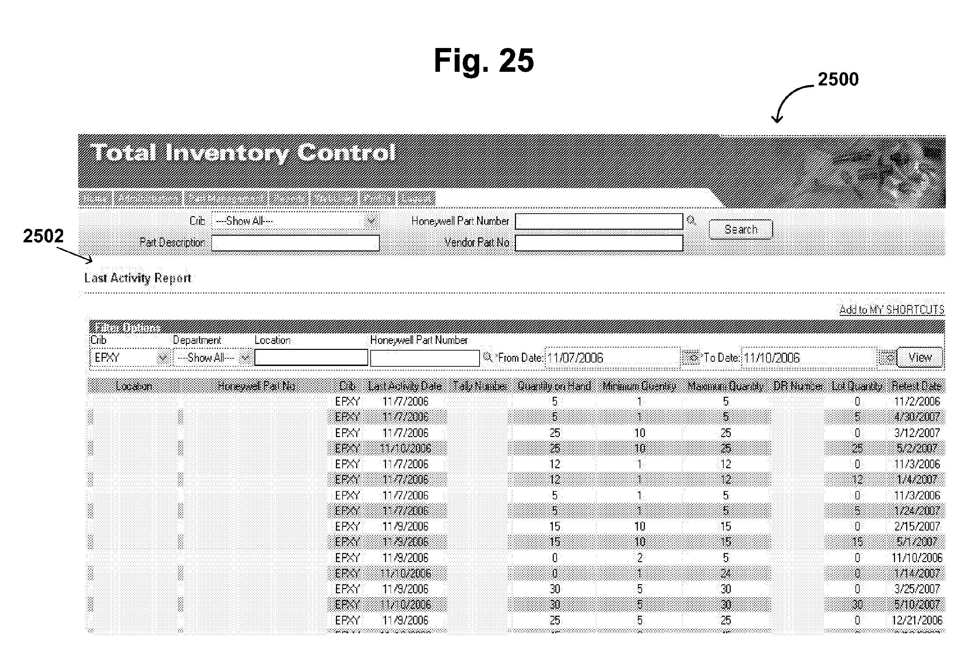

Fig. 25 shows a pictorial representation of a display screen for a user device, showing a last activity report screen 2500, according to one embodiment of the invention. The last activity report screen 2500 includes a report table 2502 showing last activity information. The information in the report table 2502 may include location, part number, crib, last activity date, tally number, quantity information, DR Number, lot quantity, and retest date. A filter may be included to allow the user to filter the report information.

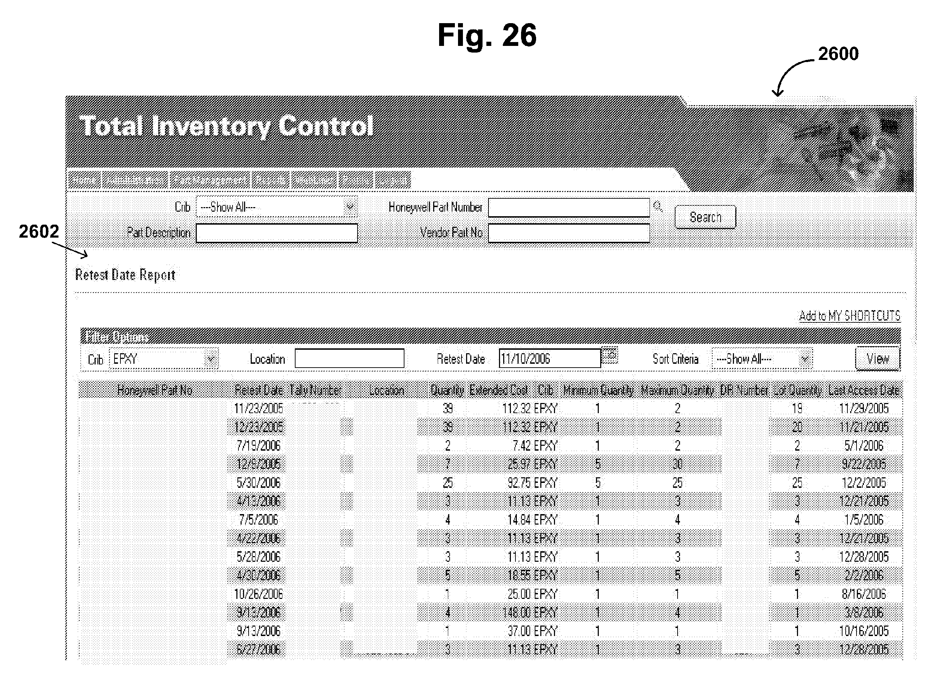

Fig. 26 shows a pictorial representation of a display screen for a user device, showing a retest date report screen 2600, according to one embodiment of the invention. The retest date report screen 2600 includes a retest date report table 2602 showing retest date information, such as part number, retest date, tally number, location, quantity, extended cost, crib, quantity specifications, DR number, lot quantity, and last access date. A filter may be included to allow the user to filter the report information.

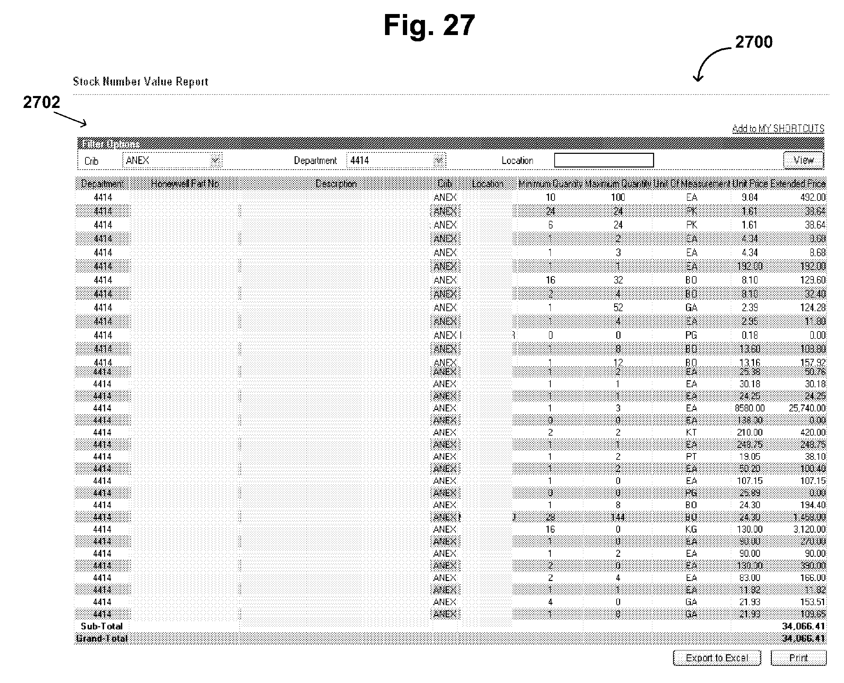

Fig. 27 shows a pictorial representation of a display screen for a user device, showing a stock number and value report screen 2700, according to one embodiment of the invention. The stock number and value report screen 2700 includes a stock number value report 2702, which may show information such as department, part number and description, crib, location, quantity information, unit of measurement, unit price, and extended quantity. A filter may be included to allow the user to filter the report information.

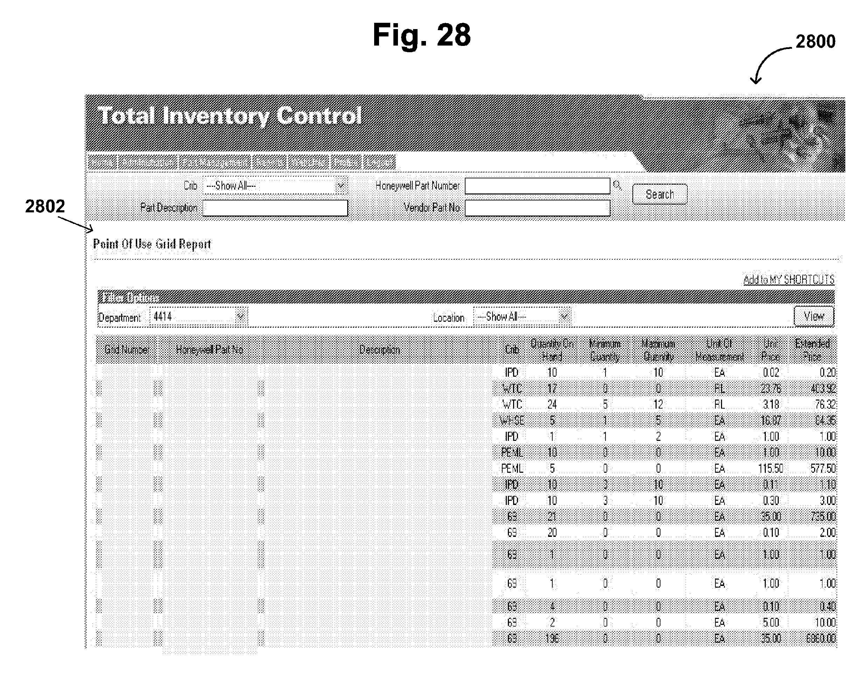

Fig. 28 shows a pictorial representation of a display screen for a user device, showing a point of use grid report screen 2800, according to one embodiment of the invention. The point of use grid report screen 2800 includes a point of use grid report 2802. The report 2802 may include the following information: grid number, part number and description, crib, quantity information, unit of measurement, unit price, and extended price. A filter may be included to allow the user to filter the report information.

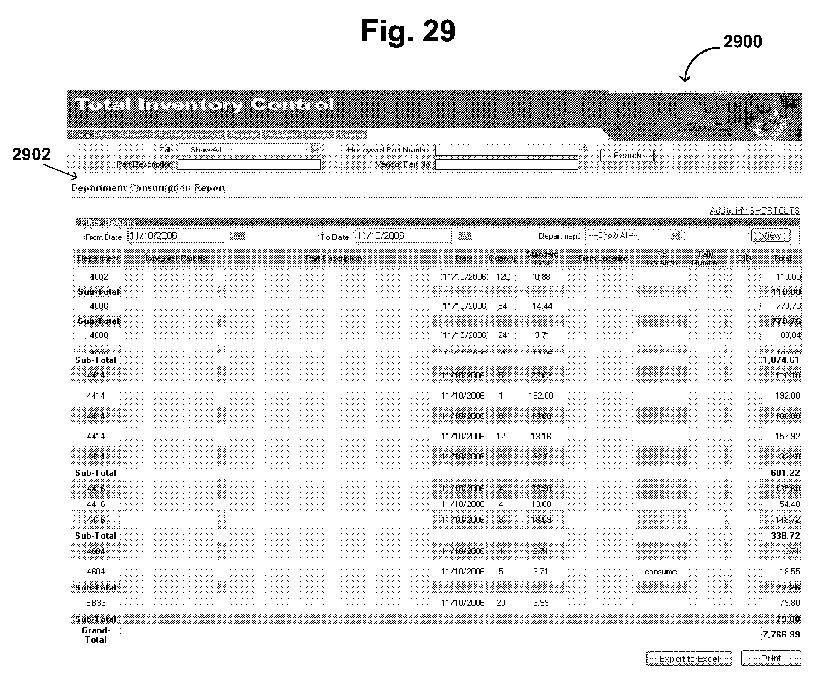

Fig. 29 shows a pictorial representation of a display screen for a user device, showing a department consumption report screen 2900, according to one embodiment of the invention. The department consumption report screen 2900 includes a department consumption report table 2902 showing department, part number and description, date, quantity, standard cost, from location, to location, tally number EID, and total. Subtotals may be calculated and displayed for each department and a grand total may be calculated for a plurality or all of the departments. A filter may be included to allow the user to filter the report information.

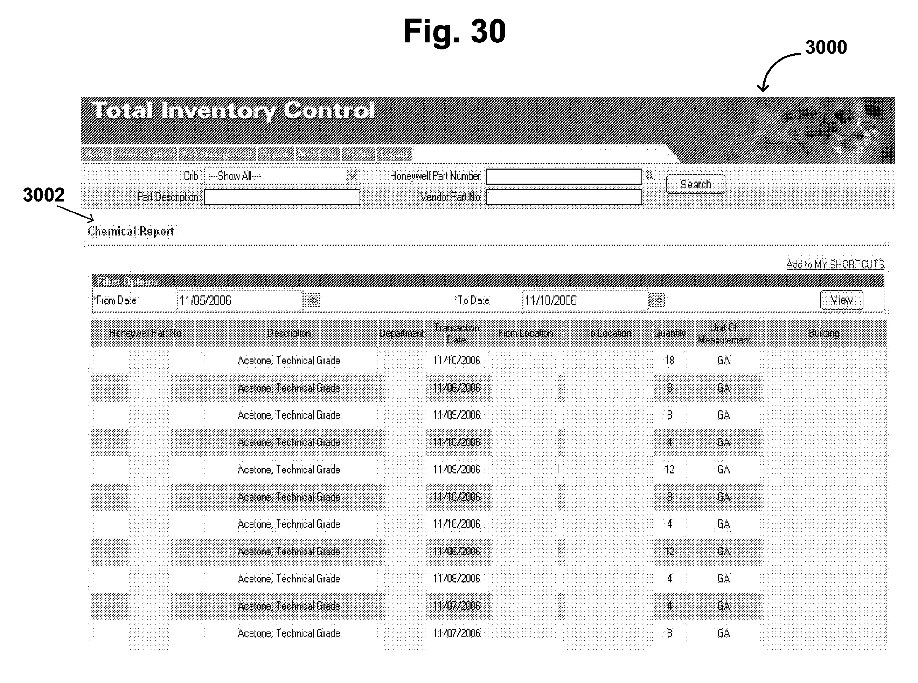

Fig. 30 shows a pictorial representation of a display screen for a user device, showing a chemical report screen 3000, according to one embodiment of the invention. The chemical report screen 3000 includes a chemical report table 3002 which may include information such as part number and description, department, transaction date, from location, to location, quantity, unit of measurement, and building. A filter may be included to allow the user to filter the report information.

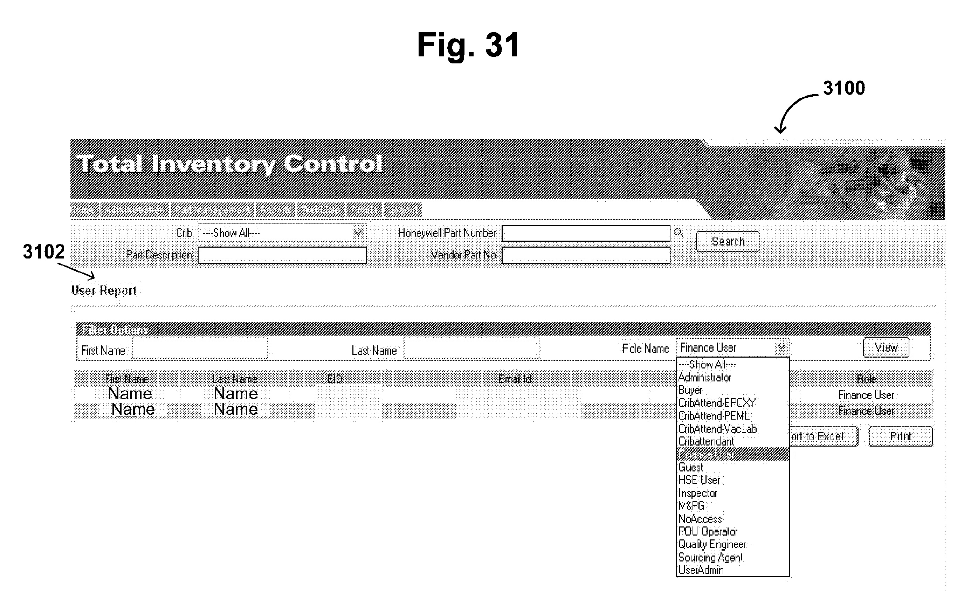

Fig. 31 shows a pictorial representation of a display screen for a user device, showing a user report screen 3100, according to one embodiment of the invention. The user report screen 3100 includes a user report table 3102, which may include user information such as first and last name, EID, Email ID, and role. Filter options may include names and roles. In the example shown, a roles pull-down menu is activated, showing examples of roles that may be used in the system.

Fig. 32 shows a pictorial representation of a display screen for a user device, showing a search results screen 3200, according to one embodiment of the invention. The search results screen 3200 includes a search results portion 3202 that preferably comprises a table with one or more of the following headings and data sets: part number, part description, crib (location), total minimum quantity, total maximum quantity, and total quantity on hand. In addition, links to screens allowing the user to manage parts and/or create new part requirements may also include for each part number. The example of Fig. 32 shows three sample parts and corresponding information pertaining to those parts. These three sample parts and the associated information were returned in response to the search string entered in the search portion 3204 (see also 304 in Fig. 3). The search portion 3204 allows the user to search by one or more of the following: crib, part description, part number, and/or vendor part number. Other search options may also be implemented.

Fig. 33 shows a pictorial representation of a display screen for a user device, showing an inventory data view screen 3300, according to one embodiment of the invention. The inventory data view screen 3300 is an example of a screen that may be displayed if a user were to select one of the part numbers shown in the search results portion of Fig. 32 and provides part-specific information. The inventory data view screen 3300 includes an inventory data view portion 3302, an add new part portion 3304, a locations portion 3306, a vendor details portion 3308, and a purchase orders portion 3310.

The inventory data view portion 3302 lists information that may be associated with a particular product. In the example shown, such information includes part number and description, total minimum and maximum quantities, total quantity on hand, distributed and purchased units of measure, replenish source, and standard cost. In addition, a number of check boxes are shown to allow the user to make various binary indications, as applicable to any particular product. Depending on the user's privileges, the user may be allowed to modify information in the inventory data view portion or the user instead may be limited to simply viewing the information.

The add new part portion 3304 allows a user with appropriate privileges to add a new part and associated information. Such information may include the manufacturer, mfr part number, vendor, vendor part number, shelf life, QC codes, lead time, and comments. In addition, a link is displayed that allows the user to view Material Safety Data Sheets (MSDS).

The locations portion 3306 shows locations at which the particular active part (displayed in the inventory data view portion 3302) may be found. New locations may also be added by users with appropriate privilege levels. The vendor details portion 3308 shows information (e.g. vendor name and contact information) about the vendor for the product.

The purchase orders portion 3310 shows information relating to purchase orders. This information may include purchase order number, vendor, manufacturer, unit price, revision, order date, promise date, order quantity, BO, BO quantity, BO date, received date, DR number, DR quantity, DTS information, and INSP information. The qualified user may also edit purchase order information and may make new orders, for example.

While certain features and embodiments of the present invention have been described in detail herein, it is to be understood that the invention encompasses all modifications and enhancements within the scope and spirit of the following claims.

## Claims

1. A system for managing inventory, comprising:
a plurality of user terminals, each at a point-of-use location associated with an inventory-consuming entity;
a web portal server computer accessible by the plurality of user terminals through an internet, the web portal server administered by the inventory-consuming entity; and
a database server in communication with the web portal server, the database server administering a database comprising a plurality of tables, wherein a first table is populated with user roles and privileges records, wherein a second table is populated with consumable part quantity on hand records, wherein a third table is populated with vendor information records, and wherein a fourth table is populated with consumable part characteristics records,
wherein upon being accessed by one of the plurality of user terminals, the web portal server computer transmits data via the internet to enable the accessing user terminal to display web pages for a user according to user roles and privileges associated with that user, as determined by reference to data stored in the first table,
wherein upon receiving a request from one of the plurality of user terminals to consume a first consumable part, the web portal server modifies the second table to reflect a new quantity on hand of the first consumable part,
wherein each consumable part supplied by an entity other than the inventory-consuming entity has the vendor information associated therewith in the third table, wherein the vendor information includes at least vendor name and contact information, and
wherein each consumable part in the fourth table has at least one of the following consumable part characteristics associated with it in the fourth table: shelf life, quality control code, unit of measure, and lead time.

2. The system of claim 1, wherein the plurality of user terminals are distributed across a plurality of point of use locations.

3. The system of claim 2, wherein the consumable parts are located in cribs in the plurality of point of use locations.

4. The system of claim 3, wherein the database further comprises a fifth table populated with parts requirements records for the inventory-consuming entity, the parts requirements records including information pertaining to point of use location, account information, part information, minimum quantity, and maximum quantity.

5. The system of claim 4, wherein upon receiving a request from one of the plurality of user terminals to create a new part requirement, the web portal server transmits data to cause a web-based form to be displayed on the user terminal to obtain information for updating the parts requirements records with the new part requirement.

6. The system of claim 5, wherein the web-based form is pre-populated with a point of use location stored in the first table with the user roles and privileges information.

7. The system of claim 3, wherein upon receiving a request from one of the plurality of user terminals to consume a part, the web portal server transmits data to cause a web-based form to be displayed on the user terminal to obtain information to modify the consumable part quantity on hand records in the second table.

8. The system of claim 1, wherein upon receiving a request from one of the plurality of user terminals to generate a report, the web portal server communicates with the database server to obtain data to generate the requested report and transmits data to cause the generated report to be displayed on the user terminal.

9. The system of claim 8, wherein the report is a procurement replenishment report including at least the following information: part identifier, quantity on hand, purchased unit of measurement, and promise date.

10. The system of claim 1, wherein the web portal server accesses the shelf life information in the fourth table and the vendor information in the third table in order to provide age control tracking and replenishment.
